# EUROPÄISCHE PATENTSCHRIFT

(11) **EP 2 743 529 B1**
(45) Veröffentlichungstag und Bekanntmachung des Hinweises auf die Patenterteilung: **07.09.2016**
(21) Anmeldenummer: 13196883.6
(22) Anmeldetag: 12.12.2013
(51) Int. Cl.: F16C 35/07

(54) **Verfahren zur Montage einer Lageranordnung**
Method for assembling a bearing assembly
Procédé de montage d'un agencement de palier

(30) Priorität: 13.12.2012 DE 102012223003
(43) Veröffentlichungstag der Anmeldung: 18.06.2014
(73) Patentinhaber: Aktiebolaget SKF, 415 50 Göteborg (SE)
(72) Erfinder: Wagner, Gerhard, 97357 Prichsenstadt (DE); Dettmer, Fritz Ulrich, 31234 Edemissen (DE); Weth, Matthias, 97526 Sennfeld (DE)
(74) Vertreter: Kuhstrebe, Jochen

(56) Entgegenhaltungen:
- EP-A1- 0 428 462
- DE-A1-102006 024 478
- DE-A1-102011 005 921
- GB-A- 1 573 913

## Beschreibung

Die Erfindung betrifft ein Verfahren zur Montage einer Lageranordnung umfassend einen Lagerträger und ein diesen aufnehmendes Gehäuseelement, wobei der Lagerträger zumindest einen zylindrischen Sitz und/oder eine radial verlaufende Anlagefläche aufweist und wobei im Gehäuseelement eine Aufnahmebohrung für den zylindrischen Sitz und/oder eine radial verlaufende Anlagefläche für die radial verlaufende Anlagefläche des Lagerträgers vorgesehen ist.

In verschiedenen Anwendungen, insbesondere im Bereich von Getrieben, werden Lagerträger eingesetzt, die ein Lager in Bezug auf ein Gehäuseelement in definierter Position halten. Der Lagerträger muss dabei mittels definierter Flächen genau zum Gehäuseelement positioniert werden. Hierfür sind beispielsweise zylindrische Absätze am Lagerträger vorgesehen, der zu einer Bohrung im Gehäuse toleriert ist.

Ein gattungsgemäßes Verfahren ist aus der DE 10 2011 005 921 A1 bekannt. Ähnliche Lösungen zeigen die EP 0 428 462 A1**,** die DE 10 2006 024 478 A1 und die GB 1 573 913 A**.**

Aufgrund von Variantenvielfalt und aufgeweiteter Toleranzbereiche in der Fertigung sowie aufgrund unterschiedlicher Oberflächenrauheiten ist es nicht immer zuverlässig gewährleistet, dass der Lagerträger am oder im Gehäuseelement sicher festliegt. Liegt keine hinreichende Festigkeit des Verbundes von Lagerträger und Gehäuseelement vor, kann es zu Mikrobewegungen und damit zu Passungsrost kommen. Des Weiteren können die Befestigungselemente (Schrauben) durch besagte Mikrobewegungen in Mitleidenschaft gezogen werden, so dass diesbezügliche Schäden nicht ausgeschlossen sind.

Dieses Problem stellt sich insbesondere dann, wenn nach Inspektionen bzw. Reparaturen der Lagerträger vom Gehäuseelement zunächst gelöst und anschließend wieder neu montiert werden muss. In diesem Falle ist es oft nur durch umfangreiche Maßnahmen (Nacharbeitungen der Sitzflächen) möglich, einen hinreichenden Halt der Teile nach der erneuten Montage sicherzustellen.

In diesem Falle müssen mitunter Hülsen in bestehende Bohrungen eingesetzt werden, um wieder eine definierte Lage für den Lagerträger sicherstellen zu können. Dementsprechend fallen hohe Kosten an.

Der Erfindung liegt die **Aufgabe** zugrunde, eine Verfahren der eingangs genannten Art so weiterzubilden, dass es in einfacherer und somit kostengünstiger Weise sichergestellt ist, dass der Lagerträger am Gehäuseelement festliegt und somit insbesondere Passungsrost sowie ein Versagen der Befestigungselemente (Schrauben) verhindert werden kann. Dabei soll steht zwischen den Bauteilen auch ein hinreichendes Niveau an Vorspannung (durch die Befestigungselemente bzw. durch Passungen) sichergestellt sein.

Die **Lösung** dieser Aufgabe durch die Erfindung ist dadurch gekennzeichnet, dass nach einer erstmaligen Montage und sich anschließender Demontage des Lagerträgers in das Gehäuseelement der zylindrische Sitz und/oder die radial verlaufende Anlagefläche des Lagerträgers und/oder die Aufnahmebohrung und/oder die radial verlaufende Anlagefläche des Gehäuseelements zumindest teilweise mit einem Lack beschichtet wird.

Die Beschichtung kann beispielsweise durch Anstreichen mit einem Pinsel oder durch Besprühen erfolgen.

Der Lack wird dabei bevorzugt in einem flüssigen Zustand auf den Lagerträger und/oder auf das Gehäuseelement aufgebracht, wobei das Fügen der Teile Lagerträger und Gehäuseelement erst erfolgt, wenn der Lack zumindest teilweise ausgehärtet ist.

Durch die vorgeschlagene Maßnahme kann auf aufwendige Nachbearbeitung der Passflächen bzw. Passfugen verzichtet werden.

Bevorzugt wird ein Lack verwendet, der als zumindest einen Grundstoff ein Epoxid- oder ein Polyurethanmaterial aufweist. Ferner wird vorzugsweise ein Lack verwendet, in dessen Grundstoff ein Hartstoffmaterial eingelagert ist. Das Hartstoffmaterial kann Keramik-Partikel und/oder Titan-Bor-Partikel aufweisen oder aus diesen Materialien bestehen.

Der Lack wird vorzugsweise auf den Lagerträger und/oder auf das Gehäuseelement mit einer Schichtdicke zwischen 15 µm und 70 µm aufgebracht. Das Hartstoffmaterial hat bevorzugt eine Partikelgröße zwischen 10 µm und 50 µm.

Bevorzugte Anwendungen des vorgeschlagenen Konzepts sind Getriebe, insbesondere Großgetriebe.

Mit der vorgeschlagenen Vorgehensweise wird erreicht, dass eine einwandfreie Haftung des Lagerträgers am Gehäuseelement auch dann nach der Montage vorliegt, wenn bereits gewisse Verschleißerscheinungen eine hinreichende Presspassung abgebaut haben. Unter allen Bedingungen ist nach dem Verschrauben des Lagerträgers mit dem Gehäuseelement eine zuverlässige Festlegung des Lagerträgers am Gehäuseelement sichergestellt, so dass kein Passungsrost zu befürchten ist.

Die Notwendigkeit, nach der Demontage von Lagerträger und Gehäuseelement eine Nacharbeitung vornehmen zu müssen, wird so erheblich vermindert, so dass große Kostenspareffekte erschlossen werden können.

Bei neuen Lageranordnungen, d. h. bei der erstmaligen Montage, wird vorteilhaft durch den Einsatz des vorgeschlagenen Konzepts ein höherer Grad an Robustheit erreicht.

In der Zeichnung ist ein Ausführungsbeispiel der Erfindung dargestellt. Es zeigen:
- Fig. 1: im Radialschnitt eine Lageranordnung, umfassend einen Lagerträger und ein diesen aufnehmendes Gehäuseelement im montierten Zustand, und
- Fig. 2: die Einzelheit "X" gemäß Fig. 1.

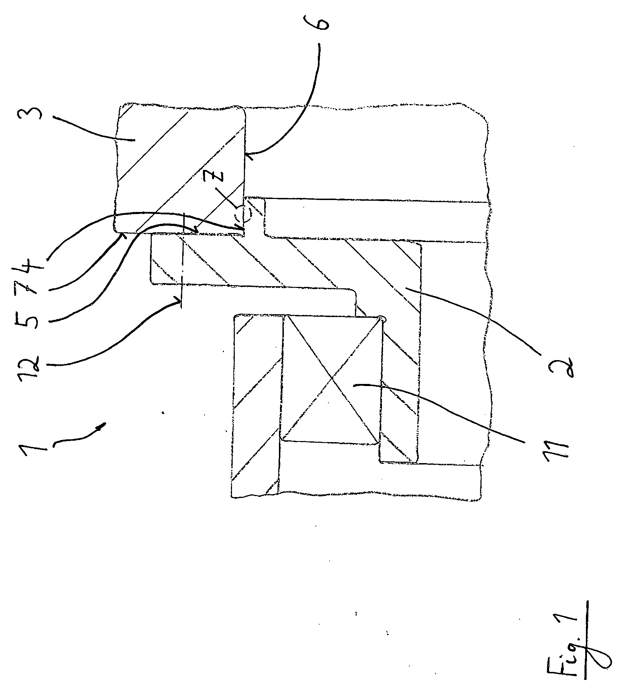

In Fig. 1 ist eine Lageranordnung 1 dargestellt, die ein Gehäuseelement 3 umfasst, in das ein Lagerträger 2 montiert ist. Der Lagerträger 2 trägt ein Lager 11.

Eine definierte Positionierung des Lagerträgers 2 am Gehäuseelement 3 ergibt sich durch einen zylindrischen Sitz 4 an einem Abschnitt des Lagerträgers 2, der zu einer Aufnahmebohrung 6 im Gehäuseelement 3 toleriert ist. Weiterhin hat der Lagerträger 2 eine radial verlaufende Anlagefläche 5, die an einer korrespondierenden radial verlaufenden Anlagefläche 7 des Gehäuseelements 3 anliegt. Somit ist der Lagerträger 2 und damit auch das Lager 11 relativ zum Gehäuseelement 3 definiert positioniert.

In dieser Position ist der Lagerträger 2 mittels einer Verschraubung 12 am Gehäuseelement 3 fixiert.

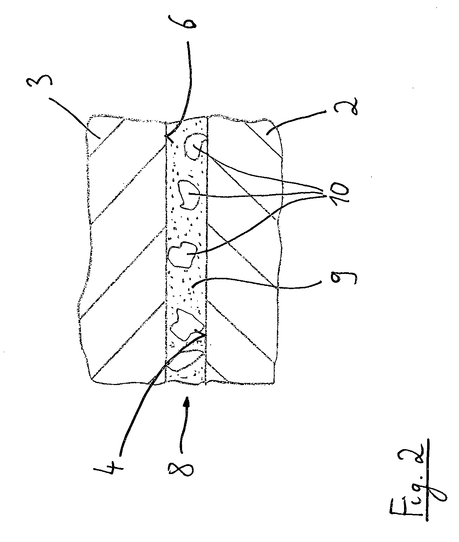

Damit die Festlegung des Lagerträgers 2 im Gehäuseelement 3 in jedem Falle sichergestellt ist, insbesondere nach einer Demontage und erneuten Montage des Lagerträgers 2 in das Gehäuseelement 3, ist vorgesehen, dass der zylindrische Sitz 4 und die radial verlaufende Anlagefläche 5 mit einem Lack 8 versehen wird, wie es aus Fig. 2 hervorgeht.

Der Lack 8 wird als Schicht mit einer Schichtdicke von beispielsweise 50 µm aufgebracht. Der Lack 8 besteht aus einem Grundstoff 9, beispielsweise in Form einer Polyurethanverbindung. In den Grundstoff sind Partikel aus Hartstoffmaterial 10 eingelagert. Aufgrund der Härte der Partikel ergibt sich ein Mikroformschluss, wenn die Verschraubung 12 bei der Montage des Lagerträgers 2 in das Gehäuseelement 3 angezogen wird.

Ein sicherer Sitz des Lagerträgers 2 im Gehäuseelement 3 ist damit sichergestellt, auch wenn die Anzugskraft der Verschraubung 12 nachlassen sollte.

Im zylindrischen Spalt zwischen dem zylindrischen Sitz 4 des Lagerträgers und der Aufnahmebohrung 6 der Gehäuseelements 3 ergibt sich infolge der Lackschicht ein gewisses Übermaß, so dass der zylindrische Sitz 4 verbessert in der Aufnahmebohrung 6 gehalten wird.

### Bezugszeichenliste

- 1: Lageranordnung
- 2: Lagerträger
- 3: Gehäuseelement
- 4: zylindrischer Sitz
- 5: radial verlaufende Anlagefläche
- 6: Aufnahmebohrung
- 7: radial verlaufende Anlagefläche
- 8: Lack
- 9: Grundstoff des Lacks
- 10: Hartstoffmaterial
- 11: Lager
- 12: Verschraubung

## Patentansprüche

1. Verfahren zur Montage einer Lageranordnung (1) umfassend einen Lagerträger (2) und ein diesen aufnehmendes Gehäuseelement (3), wobei der Lagerträger (2) zumindest einen zylindrischen Sitz (4) und/oder eine radial verlaufende Anlagefläche (5) aufweist und wobei im Gehäuseelement (3) eine Aufnahmebohrung (6) für den zylindrischen Sitz (4) und/oder eine radial verlaufende Anlagefläche (7) für die radial verlaufende Anlagefläche (5) des Lagerträgers (2) vorgesehen ist,
**dadurch gekennzeichnet,**
**dass** nach einer erstmaligen Montage und Demontage des Lagerträgers (2) in das Gehäuseelement (3) der zylindrische Sitz (4) und/oder die radial verlaufende Anlagefläche (5) des Lagerträgers (2) und/oder die Aufnahmebohrung (6) und/oder die radial verlaufende Anlagefläche (7) des Gehäuseelements (3) zumindest teilweise mit einem Lack (8) beschichtet wird.

2. Verfahren nach Anspruch 1, **dadurch gekennzeichnet, dass** die Beschichtung durch Anstreichen mit einem Pinsel erfolgt.

3. Verfahren nach Anspruch 1, **dadurch gekennzeichnet, dass** die Beschichtung durch Besprühen erfolgt.

4. Verfahren nach einem der Ansprüche 1 bis 3, **dadurch gekennzeichnet, dass** der Lack (8) in einem flüssigen Zustand auf den Lagerträger (2) und/oder auf das Gehäuseelement (3) aufgebracht wird, wobei das Fügen der Teile Lagerträger (2) und Gehäuseelement (3) erfolgt, wenn der Lack (8) zumindest teilweise ausgehärtet ist.

5. Verfahren nach einem der Ansprüche 1 bis 4, **dadurch gekennzeichnet, dass** ein Lack (8) verwendet wird, der als zumindest einen Grundstoff (9) ein Epoxid- oder ein Polyurethanmaterial aufweist.

6. Verfahren nach einem der Ansprüche 1 bis 5, **dadurch gekennzeichnet, dass** ein Lack (8) verwendet wird, in dessen Grundstoff (9) ein Hartstoffmaterial (10) eingelagert ist.

7. Verfahren nach Anspruch 6, **dadurch gekennzeichnet, dass** das Hartstoffmaterial (10) Keramik-Partikel und/oder Titan-Bor-Partikel aufweist oder aus diesen Materialien besteht.

8. Verfahren nach einem der Ansprüche 1 bis 7, **dadurch gekennzeichnet, dass** der Lack (8) auf den Lagerträger (2) und/oder auf das Gehäuseelement (3) mit einer Schichtdicke zwischen 15 µm und 70 µm aufgebracht wird.

9. Verfahren nach einem der Ansprüche 6 bis 8, **dadurch gekennzeichnet, dass** das Hartstoffmaterial (10) eine Partikelgröße zwischen 10 µm und 50 µm aufweist.

## Claims

1. Method for assembling a bearing arrangement (1) comprising a bearing carrier (2) and a housing element (3) which accommodates the latter, wherein the bearing carrier (2) has at least one cylindrical seat (4) and/or a radially extending contact surface (5), and wherein the housing element (3) is provided with a receiving bore (6) for the cylindrical seat (4) and/or a radially extending contact surface (7) for the radially extending contact surface (5) of the bearing carrier (2),
**characterized**
**in that**, after first-time assembly and disassembly of the bearing carrier (2) in the housing element (3), the cylindrical seat (4) and/or the radially extending contact surface (5) of the bearing carrier (2) and/or the receiving bore (6) and/or the radially extending contact surface (7) of the housing element (3) is coated at least partially with a paint (8).

2. Method according to Claim 1, **characterized in that** the coating is effected by painting using a brush.

3. Method according to Claim 1, **characterized in that** the coating is effected by spraying.

4. Method according to one of Claims 1 to 3, **characterized in that** the paint (8) is applied to the bearing carrier (2) and/or to the housing element (3) in a liquid state, wherein the bearing carrier (2) and housing element (3) parts are joined when the paint (8) is at least partially cured.

5. Method according to one of Claims 1 to 4, **characterized in that** use is made of a paint (8) which comprises an epoxy material or a polyurethane material as at least one base material (9).

6. Method according to one of Claims 1 to 5, **characterized in that** use is made of a paint (8) having a hard material (10) incorporated in the base material (9) thereof.

7. Method according to Claim 6, **characterized in that** the hard material (10) comprises ceramic particles and/or titanium-boron particles or consists of said materials.

8. Method according to one of Claims 1 to 7, **characterized in that** the paint (8) is applied to the bearing carrier (2) and/or to the housing element (3) with a layer thickness of between 15 µm and 70 µm.

9. Method according to one of Claims 6 to 8, **characterized in that** the hard material (10) has a particle size of between 10 µm and 50 µm.

## Revendications

1. Procédé de montage d'un ensemble de palier (1) comprenant un porte-palier (2) et un élément de boîtier (3) qui le reprend,
le porte-palier (2) présentant au moins un siège cylindrique (4) et/ou une surface de pose (5) s'étendant radialement,
l'élément de boîtier (3) présentant un alésage (6) de réception du siège cylindrique (4) et/ou une surface (7) s'étendant radialement pour la pose de la surface de pose (5) s'étendant radialement du porte-palier (2), **caractérisé en ce que**
après un premier montage du porte-palier (2) dans l'élément de boîtier (3) et son démontage, le siège cylindrique (4), la surface de pose (5) s'étendant radialement du porte-palier (2), l'alésage de réception (6) et/ou la surface de pose (7) s'étendant radialement de l'élément de boîtier (3) sont revêtus au moins en partie d'un vernis (8).

2. Procédé selon la revendication 1, **caractérisé en ce que** le revêtement s'effectue par application au pinceau.

3. Procédé selon la revendication 1, **caractérisé en ce que** le revêtement s'effectue par pulvérisation.

4. Procédé selon l'une des revendications 1 à 3, **caractérisé en ce que** le vernis (8) est appliqué à l'état liquide sur le porte-palier (2) et/ou sur l'élément de boîtier (3), la jonction des pièces porte-palier (2) et élément de boîtier (3) s'effectuant après que le vernis (8) a durci au moins en partie.

5. Procédé selon l'une des revendications 1 à 4, **caractérisé en ce qu'**il utilise un vernis (8) qui présente comme matériau ou matériaux de base (9) un matériau à base d'époxy ou un matériau à base de polyuréthane.

6. Procédé selon l'une des revendications 1 à 5, **caractérisé en ce qu'**il utilise un vernis (8) dont un matériau dur (10) est incorporé dans le matériau de base (9).

7. Procédé selon la revendication 6, **caractérisé en ce que** le matériau dur (10) présente des particules de céramique et/ou des particules de titane et de bore ou est constitué de ces matériaux.

8. Procédé selon l'une des revendications 1 à 7, **caractérisé en ce que** le vernis (8) est appliqué sur le porte-palier (2) et/ou sur l'élément de boîtier (3) à une épaisseur comprise entre 15 µm et 70 µm.

9. Procédé selon l'une des revendications 6 à 8, **caractérisé en ce que** le matériau dur (10) présente des particules d'une taille comprise entre 10 µm et 50 µm.
